# EUROPEAN PATENT SPECIFICATION

(11) **EP 0 708 285 B1**
(45) Date of publication and mention of the grant of the patent: **17.11.1999**
(21) Application number: 95110078.3
(22) Date of filing: 28.06.1995
(51) Int. Cl.: F16K 31/50, F16K 1/02

(54) **Water-sanitary control valve**
Sanitärventil
Soupape sanitaire

(30) Priority: 29.06.1994 YU 41794
(43) Date of publication of application: 24.04.1996
(73) Proprietor: Pesovic, Predrag, YU-11000 Belgrad (YU); Pesovic, Nemanja, YU-11000 Belgrad (YU); Pesovic, Vojin, YU-11000 Belgrad (YU)
(72) Inventor: Pesovic, Predrag, YU-11000 Belgrad (YU); Pesovic, Nemanja, YU-11000 Belgrad (YU); Pesovic, Vojin, YU-11000 Belgrad (YU)
(74) Representative: Goetz, Rupert, Dipl.-Ing.

(56) References cited:
- WO-A-85/03754
- CH-A- 291 888
- DD-A- 27 513
- DE-A- 2 715 218
- DE-U- 6 910 036

## Description

### FIELD OF TECHNOLOGY

The Invention belongs to the Mechanical Engineering Field, i.e. to mechanical assemblies in general, and to leading threaded spindle valves in particular. More specifically, it is a valve with a leading threaded spindle designated for water-sanitary fitting not causing water hammers in installations during its operation.

### TECHNICAL PROBLEM

The technical problem solved by the invention is the following: designing of a valve that would be able, at opening/closing, to provide for free rotation of the threaded spindle without any locking within the piston holder even after some prolonged time of non-operation of the valve, or at locations with considerable temperature variations, securing at the same time the maximum flow rate of the fluid under such circumstances, and whose design characteristics would prevent any water hammers in the installation and their consequential noise; i.e. such a valve that will completely prevent any deposition of mechanical impurities over sealing surfaces of the valve seat, or their eventual clogging. The valve has to meet, also, the requirement for long service life and for a decreased wearing rate of its elements.

### STATE OF THE ART

In practice, there are known valves operating after the principle of closing by a threaded spindle, wherein by turning the spindle, a piston is moved. The latter carries on its top a rubber gasket which, opposing the fluid pressure, is fitted over a valve seat and thus closes the water flow. A drawback of such valves resides in that the spindle, after non-operation for some time, turns hardly causing frequently its locking, i.e. its seizure, and wearing of the spindle and its threads causing failure and, finally, an inoperative condition of such valves. Also, because of the mode of closing of the valve, uncontrolled or insufficient tightening of the rubber gasket over the valve seat may occur, which result in damaging the gasket, or in erosion of the valve seat due to an increased rate of fluid flow through a reduced flow cross section.

In these well known designs, excessive friction between the threaded spindle and the nut through which the spindle is led, very often results in threaded spindle slip friction. The consequences of such an increased friction are, among others, an increase of play between the moving components, which in turn causes, when fluid flows, vibration of movable components which, due to the action of fluid pressure, generates water hammers that are transmitted to the entire installation, which make the flow-through valves exceptionally noisy devices. These phenomena are well known particularly in large apartment buildings and, among others, cause great noise in such buildings.

Known passage valves, some of which will be described later, that operate on the principle of closing in direction of the fluid flow, have common drawbacks that result in high noise level, large piston vibrations due to insufficient sealing, and, frequently, as a consequence of uncontrolled movement resulting from play, i.e. non-directional movement of fluid, which causes in turn cavitation with its negative consequences, complications and large number of components, impurity settlement, reduction of flow rate and short service life, etc.

One of the known solutions is decribed in YU PS 41131 where a noiseless valve with directional fluid flow comprises a spindle housing wherein a rotating threaded spindle is fitted, onto which a piston holder is screwed. The holder is designed with a face opening into which the piston with its pin is fitted. The piston is coupled strongly but dismantably with a support via its jaws that penetrate behind the piston rim. The piston is made with crossed tiny cogs and is guided by its cogs within two grooves of the sleeve mounted over the piston. The piston contains an O-ring seal that closes slits on the sleeve serving for fluid flow out. Closing of the fluid flow is effected by the piston head that abuts against the rubber seal.

Another well known solution of the valve is described in YU Application P-1439/86, wherein the passage valve comprising a valve housing into which, from one side thereof, is screwed a valve seat, and from the other side of the housing, a threaded spindle with a piston holder into which the piston is tightly fitted. A rubber ring seal is fitted on the head of the sleeve, and is supported on the valve seat. To avoid cavitation with its negative consequences, all valve components are made of plastic compound.

There is also a solution, presented in the YU Application P-31/87, where the invention refers to an improved noiseless valve whose threaded spindle, at its beginning and end, is provided with a set of spiral teeth. Correspondingly, the piston holder is also executed with spiral teeth, at the end of an inner thread, and these teeth co-operate with corresponding teeth when the spindle is fully screwed in. The piston holder, on its flange, is provided with opposite grooves, and a third positioning groove wherein corresponding teeth enter. These teeth are provided on the base plate of the retainer that is mounted, by its rim, over the flange. The base plate contains also spiral teeth, set in mutually opposite position, and they cooperate with the spiral teeth of the spindle when the spindle is fully turned counter-clockwise, i.e. when it is open.

Another known solution is described in YU Application P-2127/89, and it is actually a combined valve for water-sanitary fittings, where a split piston pin is pushed through the opening of a sealing spindle, and is supported by its flange on the upper wall of a square opening. On a piston skirt there are provided projections that engage grooves in a cylinder which is slantly pulled over the piston and the spindle assembly. The sealing spindle is provided with a helical groove into which projects a pin of circular shape. Depending on the variant, the helical groove is split at its beginning, while the sealing spindle is provided with a radial projection that enters the helical groove.

### DESCRIPTION OF THE INVENTIVE SOLUTION

The technical problem as defined above is solved by providing the guiding threaded spindle of the valve, which by its thread coperates with the thread of the piston holder hole, with a rim with diametrically opposite spiral teeth. These two teeth cooperative with two corresponding teeth provided on the bottom rim of the piston holder. The spindle is secured against axial droppage by a key. The piston is provided circumferentially with two teeth that are guided in grooves provided on the rubber seal holder.

The piston holder comprises at least two spring-type teeth that are coupled with corresponding teeth provided on the valve body, which secures retreat of the holder and opening of the valve, i.e. prevents over-tightening of the valve when being closed.

Advantages of such a solution over widely known solutions, some of which have been described above, reside in that the inventive design prevents water hammers in the installation, operates noiselessly, there is no possibility of stoppage in operation of the spindle-holder-valve body-piston assembly, the fluid flow is at its maximum level, mechanical impurities deposition, i.e. their clogging on the sealing surfaces of the seat is absolutely impossible.

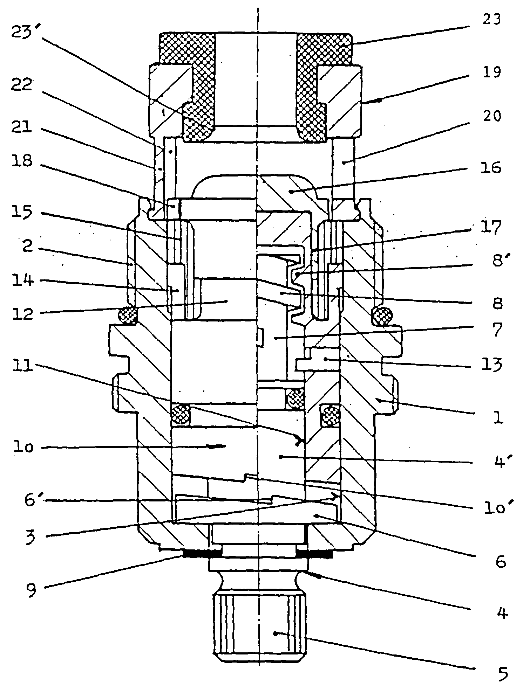

The invention will be more precisely explained on the basis of an example of its design as shown in Fig. 1, which presents the valve in partial cross-section.

The enclosed figure shows the valve representing the invention comprising a valve body (1), with an external thread (2) adapted to standard fittings. In an inner opening (3) of the body (1) there is accomodated a bush-holder (10) of a piston (16), with a leading threaded spindle (4). At the free end of the spindle (4) there is a pin (5) that is grooved so that it is adapted to firmly and safely bear a handle, not shown, for opening/closing of the valve. Above the pin (5) there is provided a groove for a retainer-circlip (9), and then a rim (6) and a spindle neck (4'). The circlip (9) secures the spindle (4) against axial shift. At the other end (7) of the spindle (4) there is provided a (left) thread (8) that cooperates with a thread (8') located on the wall at the lower part of a hole (11) of the holder (10) of the piston (16). The spindle (4) is secured against droppage from the holder (10) by a key (13) that passes through the wall of the holder (10). The rim (6), with its bottom surface, bears against the body (1) of the valve and two opposite, and mutually shifted by 90°, spiral teeth (6') are provided.

The holder (10) is tapered in the zone of the thread (8') and at least two spring-type teeth (14) are crosswisely arranged in this zone, and these teeth (14) are coupled with corresponding teeth (15) provided on the valve body (1). The teeth (14 and 15) are designed tangentially, so that, upon upward motion of the holder (10) to the closing position, the teeth (14) slip over the teeth (15), by which overtightening of the valve is prevented, i.e. their slip-friction in open/closed position is made possible. When the valve is being opened, the teeth (14 and 15), are coupled whereby downward withdrawal of the holder (10) and thus the opening of the valve is guaranteed.

On the bottom head surface of the holder (10) there are provided spiral teeth (6'), offset by 90°, and teeth (10') which, during valve opening/closing are co-acting with the teeth (6') on the rim (6). The role of these teeth (6', 10') is to prevent the spindle (4) head, during closing/tightening of the valve, from leaning ("sticking") to the hole (11) bottom of the holder (10) and thus cause the assembly to lock. The upper part (12) of the holder (10) is smaller in diameter and enters the hole of a cylindrical stem (17) of the piston (16).

On the upper circumferential surface there is located a bush-holder (19) for a rubber seal (23). On the bottom part of the holder (19) two mutually symmetrical, wide openings (20) are provided. In the posts (21) of the holder (19), formed in this way, there are provided axially extending internal grooves (22) wherein teeth (18) are accommodated in slipping relationsship, which teeth are provided on an edge rim of the piston (16) diametrically oppositely with respect to each other. The rubber seal (23) is fixed internally, and is fixed also over the holder (19) face, with a seat (23'), for the piston face (16), provided on the bottom edge.

The mode of functioning of the threaded spindle-piston-holder/rubber-seal-holder assembly, which is the object of this invention, is as follows:

After screwing of the leading threaded spindle (4) into the piston (16) holder (10), the assembly is to be secured by the key (13). The so obtained assembly is completed and setup into the valve housing (1). By turning the pin (5), i.e. the spindle (4) in counter-clockwise direction, for opening of the valve, the spindle (4), with the aid of the threads (8 and 8'), pulls the holder (10) down. At the moment of actuation of the holder (10), water pressure on the piston (16) head pushes the piston (16) uniformly downward, with its stroke still because it is led by teeth (18) in the grooves (22) on the posts (21) of the holder (19). The holder (10) travels down the spindle (4) until the spiral teeth (10') engage the spiral teeth (6'). In this stage of opening, the teeth (14 and 15) are coupled to each other, which secures withdrawal of the holder (10) downward, by which opening of the valve is effected.

During the actuation of the valve and setting it into the closed position, the procedure of functioning is opposite, in that the teeth (14) are coupled with the teeth (15) on the body (1) and they slip, at ultimate positions, over them which makes possible slip-friction and by this overtightening of the valve is prevented.

When opening as well as when closing of valve, there is provided for jumping of the flexible projection-teeth, which produces a sound that is at the same time the signal that the valve is sufficiently closed or open, respectively.

## Claims

1. A valve (1) for water-sanitary fittings wherein
- on a thread (8) of a spindle (4) there is screwed a threaded holder (10) of a piston (16),
- on the holder (10), in the zone of the thread (8')thereof, there are provided at least two teeth (14) that are coupled with corresponding teeth (15) on a valve body (1),
- on a rim (6) of the spindle (4) and on the bottom head surface of the holder (10), there are provided two teeth (6' and 10'), identical and located mutually oppositely, shifted by 90° in relation to each other, so that they are mutually locked,
- a key (13) is provided that passes through the holder (10) wall securing the spindle (4) in the holder (10) in axial direction,
- on a piston (16) rim, with its shank positioned on the upper part (12) of the holder (10), there are provided two diametrically opposite teeth (18), in sliding engagement in grooves (22), provided on posts (21) of a holder (19) of a rubber seal (23).

## Patentansprüche

1. Ventil (1) für Sanitärarmaturen, bei dem
- eine mit einem Gewinde versehene Halterung (10) eines Kolbens (16) auf ein Gewinde (8) einer Spindel (4) aufgeschraubt ist;
- an der Halterung (10), im Bereich von deren Gewinde (8'), mindestens zwei Zähne (14) vorgesehen sind, die mit entsprechenden Zähnen (15) an einem Ventilkörper (1) gekoppelt sind;
- an einer Schulter (6) der Spindel (4) und an der unteren Kopffläche der Halterung (10) zwei identische, einander gegenüberliegende Zähne (6' und 10') vorgesehen sind, die um 90° in Bezug zueinander versetzt sind, so daß sie gegeneinder sperren;
- ein Keil (13) vorgesehen ist, der durch die Wand der Halterung (10) hindurchgeht und die Spindel (4) in der Halterung (10) in axialer Richtung festlegt;
- an einer Schulter eines Kolbens (16), dessen Schaft sich am oberen Teil (12) der Halterung (10) befindet, zwei diametral gegenüberliegende Zähne (18) vorgesehen sind, die im Gleiteingriff mit Nuten (22) stehen, welche in Stützen (21) einer Halterung (19) für eine Gummidichtung (23) vorgesehen sind.

## Revendications

1. Soupape (1) pour les raccords de sanitaires dans laquelle
- un support fileté (10) d'un piston (16) est vissé sur un filetage (8) d'une broche (4),
- sur le support (10), dans la zone du filet (8') de celui-ci, il y a au moins deux dents (14) qui sont couplées à des dents correspondantes (15) sur un corps de soupape (1),
- sur un pourtour (6) de la broche (4) et sur la surface principale inférieure du support (10), il y a deux dents (6' et 10'), identiques et situées mutuellement à l'opposé, décalées de 90° l'une par rapport à l'autre, de façon qu'elles soient mutuellement enclenchées,
- il y a une clavette (13) qui passe à travers la paroi du support (10) fixant la broche (4) dans le support (10) dans la direction axiale,
- sur un pourtour de piston (16), avec sa partie lisse placée sur la partie supérieure (12) du support (10), il y a deux dents diamétralement opposées (18), en liaison glissante dans des cannelures (22), réalisées sur des montants (21) d'un support (19) d'un joint en caoutchouc (23).
